# FASCICULE DE BREVET EUROPEEN

(11) **EP 3 557 123 B1**
(45) Date de publication et mention de la délivrance du brevet: **13.01.2021**
(21) Numéro de dépôt: 19169609.5
(22) Date de dépôt: 16.04.2019
(51) Int. Cl.: F21S 8/04, F21V 21/002, F21V 23/06, F21Y 115/10, F21Y 105/10

(54) **LUMINAIRE ÉQUIPÉ D'UNE FICHE DE CONNEXION DCL**
LEUCHTE, DIE MIT EINEM DCL-STECKER AUSGESTATTET IST
LUMINAIRE PROVIDED WITH A DCL CONNECTION PLUG

(30) Priorité: 17.04.2018 FR 1853327
(43) Date de publication de la demande: 23.10.2019
(73) Titulaire: L'Ebenoid, 69800 Saint-Priest (FR)
(72) Inventeur: PALOMBO, Sylvain, 69390 VERNAISON (FR)
(74) Mandataire: Lavoix

(56) Documents cités:
- WO-A2-00/16442
- WO-A2-2006/060772
- DE-U1- 20 214 270
- FR-A1- 2 818 032
- FR-A1- 2 996 688
- MICHEL BOURGET: "Sécurité: un dispositif de connexion pour les luminaires", INTERNET CITATION, mars 2002 (2002-03), XP002434222, Extrait de l'Internet: URL:http://www.promotelec.com/upload/filpi lote/771272_632334570971406250.pdf [extrait le 2007-05-18]

## Description

La présente invention concerne un luminaire équipé d'une fiche de connexion DCL.

Il est connu de connecter électriquement un luminaire à un circuit d'alimentation électrique d'un bâtiment par l'intermédiaire d'un dispositif de connexion luminaire (DCL). De tels luminaires sont par exemple divulgués dans les documents FR2818032A1 et FR2996688A1.

Un tel dispositif de connexion luminaire comporte de façon connue un socle de connexion DCL (formant un élément de connexion femelle) intégré dans un support, tel qu'un mur ou un plafond, et une fiche de connexion DCL (formant un élément de connexion mâle) destinée à être connectée mécaniquement et électriquement au socle de connexion DCL.

Généralement, un procédé de connexion d'un luminaire à un socle de connexion DCL intégré dans un support comprend les étapes suivantes :
- raccordement électrique du luminaire à une fiche de connexion DCL au moyen d'un câble électrique,
- connexion électrique de la fiche de connexion DCL au socle de connexion DCL, et
- fixation mécanique du luminaire au support à l'aide de vis de fixation ou d'éléments de fixation additionnels.

Un tel procédé de connexion peut toutefois s'avérer complexe et fastidieux, notamment en raison de l'étape de fixation mécanique du luminaire au support.

La présente invention vise à remédier à tout ou partie de ces inconvénients.

Le problème technique à la base de l'invention consiste donc à fournir un luminaire qui soit de structure simple et économique, tout en permettant une connexion électrique et une fixation mécanique aisées du luminaire.

A cet effet, la présente invention concerne un luminaire, et par exemple un luminaire à diodes électroluminescentes, comportant :
- une fiche de connexion DCL destinée à être connectée mécaniquement et électriquement à un socle de connexion DCL intégré dans un support, tel qu'un mur ou un plafond, pourvu d'une surface de support, et
- un boîtier de luminaire à partir duquel s'étend la fiche de connexion DCL, le boîtier de luminaire comprenant une partie de protection comprenant une surface de contact configurée pour être positionnée contre ou à proximité de la surface de support lorsque la fiche de connexion DCL est connectée mécaniquement et électriquement au socle de connexion DCL.

Une telle configuration du luminaire selon la présente invention permet de réaliser la fixation mécanique du luminaire au support directement à l'aide de la fiche de connexion DCL. Ainsi, l'étape de connexion électrique du luminaire au socle de connexion DCL et l'étape de fixation mécanique du luminaire sont réalisées simultanément, ce qui élimine la nécessité de fixer le boîtier de luminaire à la surface de support du support à l'aide de vis ou de moyens de fixation supplémentaires.

La configuration du luminaire selon la présente invention permet par conséquent de grandement simplifier l'installation du luminaire sur un support.

Le luminaire peut en outre présenter une ou plusieurs des caractéristiques suivantes, prises seules ou en combinaison.

Selon un mode de réalisation de l'invention, la partie de protection s'étend autour de la fiche de connexion DCL de telle sorte que la fiche de connexion DCL est inaccessible, notamment par un utilisateur, lorsque la fiche de connexion DCL est connectée mécaniquement et électriquement au socle de connexion DCL. Ces dispositions permettent d'assurer une connexion esthétique et sécurisée du luminaire.

Selon un mode de réalisation de l'invention, la partie de protection a une forme globalement cylindrique. Avantageusement, la partie de protection présente une section transversale sensiblement circulaire.

Selon un mode de réalisation de l'invention, la fiche de connexion DCL comporte une partie d'insertion destinée à être insérée dans un puits de connexion appartenant au socle de connexion DCL.

Selon l'invention, le luminaire comporte une carte électronique disposée dans le boîtier de luminaire.

Selon un mode de réalisation de l'invention, le luminaire comporte au moins une diode électroluminescente disposée dans le boîtier de luminaire et configurée pour émettre un faisceau lumineux.

Selon un mode de réalisation de l'invention, l'au moins une diode électroluminescente est fixée sur la carte électronique.

Selon l'invention, le boîtier de luminaire comprend un logement de réception configuré pour recevoir un crochet de fixation appartenant au socle de connexion DCL lorsque la fiche de connexion DCL est connectée mécaniquement et électriquement au socle de connexion DCL. Une telle configuration du boîtier de luminaire permet de limiter l'encombrement du luminaire.

Selon l'invention, la carte électronique est pourvue d'une ouverture de passage, le boîtier de luminaire comportant une partie de réception délimitant le logement de réception et s'étendant à travers l'ouverture de passage. Une telle configuration de la carte électronique permet de limiter encore l'encombrement du luminaire.

Selon un mode de réalisation de l'invention, le boîtier de luminaire comporte :
- une embase comprenant une première face destinée à être tournée vers la surface de support et à partir de laquelle fait saillie la fiche de connexion DCL, et une deuxième face opposée à la première face, et
- un capot de diffusion de lumière fixé sur l'embase et recouvrant la deuxième face de l'embase.

Selon un mode de réalisation de l'invention, la partie de protection fait saille de la première face de l'embase.

Selon un mode de réalisation de l'invention, l'embase comporte une paroi périphérique comportant la partie de protection.

Selon un mode de réalisation de l'invention, l'embase et la partie d'insertion de la fiche de connexion DCL sont réalisées en une seule pièce.

Selon un mode de réalisation de l'invention, l'embase comporte une pluralité de plots d'appui faisant saillie à partir de la première face de l'embase et destinés à prendre appui contre la surface de support.

Selon un mode de réalisation de l'invention, l'embase a une forme générale de disque.

Selon un mode de réalisation de l'invention, le logement de réception débouche dans la première face de l'embase, et par exemple dans une portion centrale de la première face de l'embase.

Selon un mode de réalisation de l'invention, la partie de réception fait saillie de la deuxième face de l'embase.

Selon un mode de réalisation de l'invention, la carte électronique est située en regard de la deuxième face de l'embase.

Selon un mode de réalisation de l'invention, la fiche de connexion DCL comprend un organe de fixation qui est élastiquement déformable entre une position de fixation dans laquelle l'organe de fixation est apte à coopérer avec un élément de fixation prévu sur le socle de connexion DCL de manière à connecter mécaniquement la fiche de connexion DCL au socle de connexion DCL, et une position de libération dans laquelle la fiche de connexion DCL est apte à être déconnectée mécaniquement du socle de connexion DCL.

Selon un mode de réalisation de l'invention, l'organe de fixation est une languette de fixation.

Selon un mode de réalisation de l'invention, l'organe de fixation s'étend à partir de la partie d'insertion, et est destiné à être reçu dans le puits de connexion du socle de connexion DCL.

Selon un mode de réalisation de l'invention, le luminaire comprend en outre un organe de déverrouillage qui est accessible lorsque la fiche de connexion DCL est connectée mécaniquement et électriquement au socle de connexion DCL, l'organe de déverrouillage étant déplaçable, par exemple manuellement, entre une position de repos et une position de déverrouillage dans laquelle l'organe de déverrouillage sollicite l'organe de fixation dans la position de libération. La présence d'un tel organe de déverrouillage permet d'assurer un démontage aisé et rapide du luminaire selon la présente invention.

Selon un mode de réalisation de l'invention, l'organe de déverrouillage est monté coulissant, par exemple selon une direction de déplacement radiale, entre les positions de libération et de repos.

Selon un mode de réalisation de l'invention, le luminaire comprend au moins un élément de sollicitation configuré pour solliciter élastiquement l'organe de déverrouillage vers la position de repos.

Selon un mode de réalisation de l'invention, l'organe de déverrouillage comporte une partie de manipulation située au niveau d'une surface périphérique externe du boîtier de luminaire.

Selon un mode de réalisation de l'invention, la partie de protection comporte une fenêtre, formée par exemple par une encoche ou fente, configurée pour permettre l'accès à la partie de manipulation de l'organe de déverrouillage, ou configurée pour permettre le passage de l'organe de déverrouillage.

Selon un mode de réalisation de l'invention, l'embase comporte des organes de retenues, tels que des languettes de retenues, configurés pour retenir la carte électronique sur l'embase.

Selon un mode de réalisation de l'invention, la fiche de connexion DCL comprend des broches de connexion électrique. De façon avantageuse, chaque broche de connexion électrique comprend une extrémité de connexion faisant saillie de la partie d'insertion et destinée à être connectée électriquement à un contact électrique dont est pourvu le socle de connexion DCL.

Selon un mode de réalisation de l'invention, le luminaire comprend au moins un élément de guidage, par exemple ménagé sur l'embase, configuré pour guider l'organe de déverrouillage lors de ses déplacements entre les positions de déverrouillage et de repos.

Selon un mode de réalisation de l'invention, le luminaire comprend au moins une douille de connexion électrique, par exemple à vis ou à baïonnette, logée dans le boîtier de luminaire et à laquelle est destinée à être connectée une lampe électrique, également nommée ampoule électrique, qui peut être par exemple à halogène, à filament ou à diodes électroluminescentes.

De toute façon l'invention sera bien comprise à l'aide de la description qui suit en référence aux dessins schématiques annexés représentant, à titre d'exemple non limitatif, une forme d'exécution de ce luminaire.
Figure 1 est une vue en perspective d'un luminaire, selon la présente invention, fixé sur un support, tel qu'un mur ou un plafond.
Figure 2 est une vue en coupe, en perspective, du luminaire de la figure 1.
Figure 3 est une vue en coupe du luminaire de la figure 1 selon un premier plan de coupe.
Figures 4 et 5 sont des vues en coupe du luminaire de la figure 1 selon un deuxième et un troisième plans de coupe parallèles entre eux et perpendiculaires au premier plan de coupe.
Figure 6 est une vue en perspective de dessous du luminaire de la figure 1.

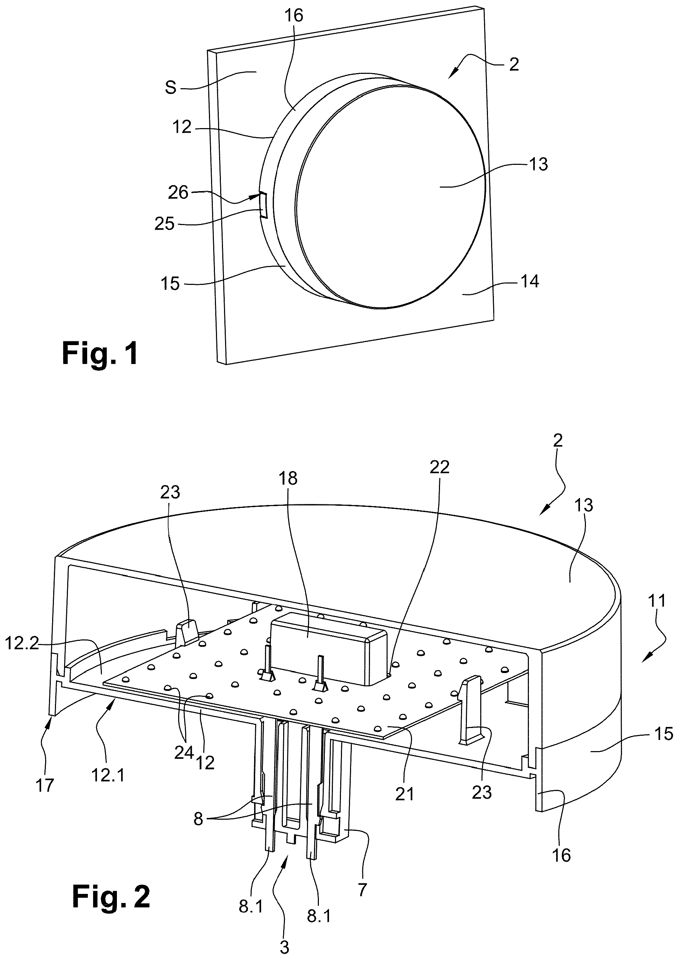

Les figures 1 à 6 représentent un luminaire 2, et plus particulièrement un luminaire à diodes électroluminescentes.

Le luminaire 2 comporte une fiche de connexion DCL 3 destinée à être connectée mécaniquement et électriquement à un socle de connexion DCL 4 intégré dans un support S, tel qu'un mur ou un plafond. Le socle de connexion DCL 4 comporte de façon connue notamment un puits de connexion 5 dans lequel la fiche de connexion DCL 3 est destinée à être enfichée, et un crochet de fixation 6.

La fiche de connexion DCL 3 comporte notamment une partie d'insertion 7 destinée à être insérée dans le puits de connexion 5 du socle de connexion DCL 4, et des broches de connexion électrique 8 comprenant des extrémités de connexion 8.1 faisant saillie de la partie d'insertion 7 et destinées à être connectées électriquement à des contacts électriques 9 dont est pourvu le socle de connexion DCL 4. La partie d'insertion 7 peut par exemple présenter une forme globalement parallélépipédique.

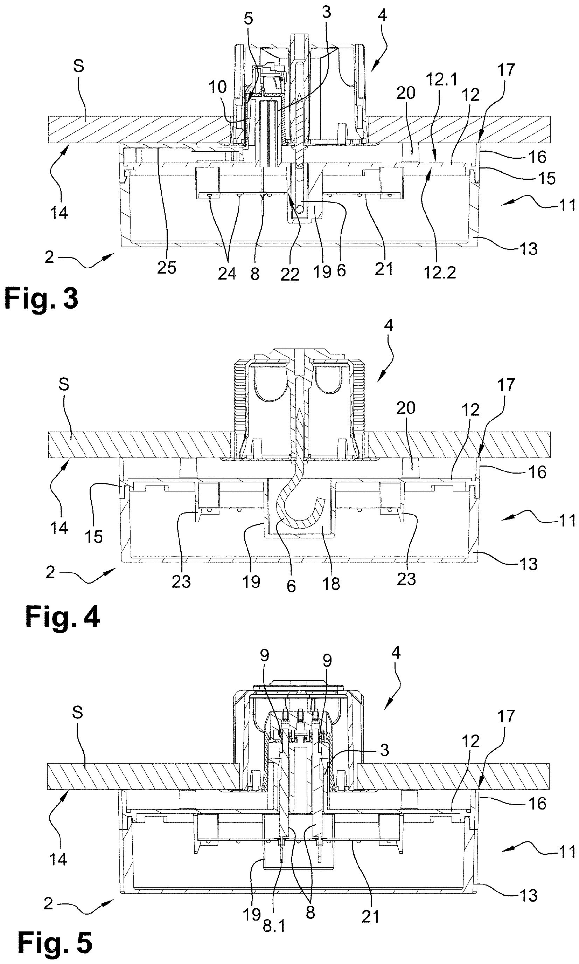

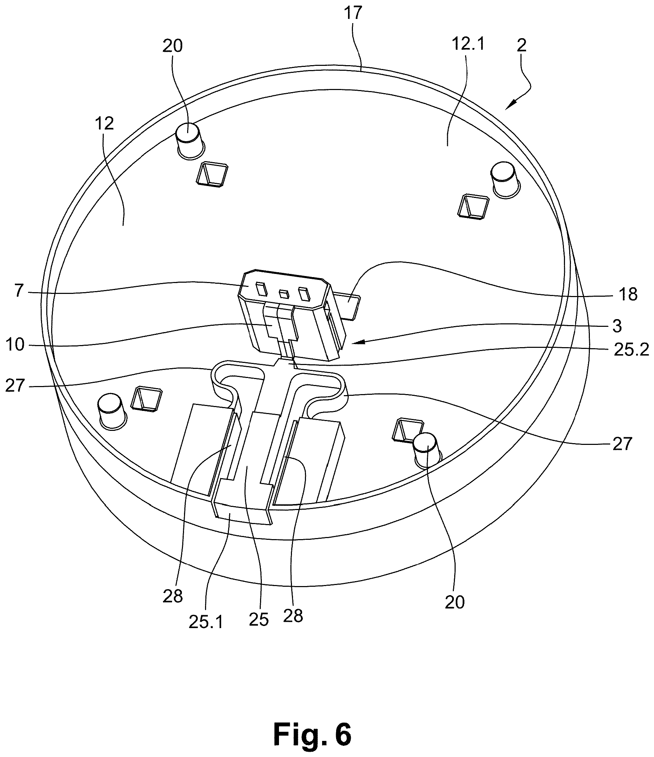

Comme montré sur les figures 3 et 6, la fiche de connexion DCL 3 comporte en outre un organe de fixation 10, tel qu'une languette de fixation, qui est élastiquement déformable entre une position de fixation dans laquelle l'organe de fixation 10 est apte à coopérer avec un élément de fixation prévu sur le socle de connexion DCL 4 (et par exemple dans le puits de connexion 5) de manière à connecter mécaniquement la fiche de connexion DCL 3 au socle de connexion DCL 4, et une position de libération dans laquelle la fiche de connexion DCL 3 est apte à être déconnectée mécaniquement du socle de connexion DCL 4 et à être retirée hors du puits de connexion 5. De façon avantageuse, l'organe de fixation 10 s'étend à partir de la partie d'insertion 7 et le long d'une paroi latérale externe de la partie d'insertion, et est destiné à être reçu dans le puits de connexion 5.

Le luminaire 2 comporte en outre un boîtier de luminaire 11 comportant une embase 12 et un capot de diffusion de lumière 13 fixé sur l'embase 12, par exemple par encliquetage ou par montage en force. Selon le mode de réalisation représenté sur les figures, le boîtier de luminaire 11 a globalement une forme de disque. Toutefois, le boîtier de luminaire 11 pourrait avoir une toute autre forme, par exemple carrée, rectangulaire, ou encore en étoile.

L'embase 12 comporte une première face 12.1 opposée au capot de diffusion de lumière 13 et destinée à être tournée vers une surface de support 14 du support S, et une deuxième face 12.2 opposée à la première face 12.1 et recouverte par le capot de diffusion de lumière 13. Selon le mode de réalisation représenté sur les figures, les première et deuxième faces 12.1, 12.2 de l'embase 12 sont sensiblement plane. Comme cela ressort sur la figure 6, la fiche de connexion DCL 3 fait saillie de la première face 12.1 de l'embase 12, et est située plus particulièrement dans une portion centrale de la première face 12.1.

L'embase 12 comporte en outre une paroi périphérique 15 comportant une partie de protection 16 faisant saille de la première face 12.1 de l'embase 12. La partie de protection 16 comprend une surface de contact 17 configurée pour être positionnée contre ou à proximité de la surface de support 14 lorsque la fiche de connexion DCL 3 est connectée mécaniquement et électriquement au socle de connexion DCL 4. En outre, la partie de protection 16 entoure la fiche de connexion DCL 3 de telle sorte que la fiche de connexion DCL 3 est inaccessible pour un utilisateur lorsque la fiche de connexion DCL 3 est connectée mécaniquement et électriquement au socle de connexion DCL 4.

Selon le mode de réalisation représenté sur les figures, la partie de protection 16 a une forme globalement cylindrique, et présente une section transversale sensiblement circulaire. Toutefois, la partie de protection 16 pourrait présenter une section transversale d'une toute autre forme, et ce notamment si le boîtier de luminaire n'a pas une forme de disque.

Le boîtier de luminaire 11 comprend en outre un logement de réception 18 prévu sur l'embase 12 et configuré pour recevoir le crochet de fixation 6 appartenant au socle de connexion DCL 4 lorsque la fiche de connexion DCL 3 est connectée mécaniquement et électriquement au socle de connexion DCL 4. De façon avantageuse, le logement de réception 18 débouche dans la première face 12.1 de l'embase 12, et par exemple dans une portion centrale de la première face 12.1 de l'embase 12. Selon le mode de réalisation représenté sur les figures, l'embase 12 comporte une partie de réception 19 délimitant le logement de réception 18 et faisant saillie de la deuxième face 12.2 de l'embase 12. La partie de réception 19 peut par exemple présenter une forme globalement parallélépipédique.

De façon avantageuse, l'embase 12 comporte de plus des plots d'appui 20 faisant saillie à partir de la première face 12.1 de l'embase 12 et destinés à prendre appui contre la surface de support 14.

Le luminaire 2 comporte également une carte électronique 21 disposée dans le boîtier de luminaire 11, et située plus particulièrement en regard de la deuxième face 12.2 de l'embase 12. Avantageusement, la carte électronique 21 est pourvue d'une ouverture de passage 22 à travers laquelle s'étend la partie de réception 19, et l'embase 12 comporte des organes de retenues 23, tels que des languettes de retenues, configurés pour retenir la carte électronique 21 sur l'embase 12.

Le luminaire 2 comporte de plus une pluralité de diodes électroluminescentes 24 fixées sur la carte électronique 21, et configurées pour émettre chacune un faisceau lumineux apte à traverser le capot de diffusion de lumière 13.

Le luminaire 2 comprend en outre un organe de déverrouillage 25 qui est accessible lorsque la fiche de connexion DCL 3 est connectée mécaniquement et électriquement au socle de connexion DCL 4. L'organe de déverrouillage 25 est déplaçable, par exemple selon une direction de déplacement radiale, entre une position de déverrouillage dans laquelle l'organe de déverrouillage 25 sollicite l'organe de fixation 10 dans la position de libération, et une position de repos (voir les figures 3 et 6) dans laquelle l'organe de déverrouillage 25 ne sollicite pas l'organe de fixation 10.

Avantageusement, l'organe de déverrouillage 25 comporte une partie de manipulation 25.1 située au niveau d'une surface périphérique externe du boîtier de luminaire 11 et destinée à être manipulée par un utilisateur, et une partie d'actionnement 25.2 opposée à la partie de manipulation 25.1 et configurée pour coopérer avec l'organe de fixation 10. Selon le mode de réalisation représenté sur les figures, la partie de protection 16 comporte une fenêtre 26, formée par exemple par une encoche, configurée pour permettre l'accès à la partie de manipulation 25.1 de l'organe de déverrouillage 25, et l'organe de déverrouillage 25 est allongé et s'étend selon une direction d'extension.

Le luminaire 2 comprend de plus un ou plusieurs élément(s) de sollicitation 27 configuré(s) pour solliciter élastiquement l'organe de déverrouillage 25 vers la position de repos, ainsi que deux nervures de guidage 28 ménagées sur la première face 12.1 de l'embase 12 et configurées pour guider la partie de manipulation 25.1 lors des déplacements de l'organe de déverrouillage 25 entre les positions de déverrouillage et de repos.

## Revendications

1. Luminaire (2) comportant :
- une fiche de connexion DCL (3) destinée à être connectée mécaniquement et électriquement à un socle de connexion DCL (4) intégré dans un support (S), tel qu'un mur ou un plafond, pourvu d'une surface de support (14) ;
- un boîtier de luminaire (11) à partir duquel s'étend la fiche de connexion DCL (3), le boîtier de luminaire (11) comprenant une partie de protection (16) comprenant une surface de contact (17) configurée pour être positionnée contre ou à proximité de la surface de support (14) lorsque la fiche de connexion DCL (3) est connectée mécaniquement et électriquement au socle de connexion DCL (4) ; et
- une carte électronique (21) disposée dans le boîtier de luminaire (11), **caractérisée en ce que** le boîtier de luminaire (11) comprend un logement de réception (18) configuré pour recevoir un crochet de fixation (6) appartenant au socle de connexion DCL (4) lorsque la fiche de connexion DCL (3) est connectée mécaniquement et électriquement au socle de connexion DCL (4) et la carte électronique (21) est pourvue d'une ouverture de passage (22), le boîtier de luminaire (11) comportant une partie de réception (19) délimitant le logement de réception (18) et s'étendant à travers l'ouverture de passage (22).

2. Luminaire (2) selon la revendication 1, dans lequel la partie de protection (16) s'étend autour de la fiche de connexion DCL (3) de telle sorte que la fiche de connexion DCL (3) est inaccessible lorsque la fiche de connexion DCL (3) est connectée mécaniquement et électriquement au socle de connexion DCL (4).

3. Luminaire (2) selon l'une quelconque des revendications 1 à 2, dans lequel le boîtier de luminaire (11) comporte :
- une embase (12) comprenant une première face (12.1) destinée à être tournée vers la surface de support (14) et à partir de laquelle fait saillie la fiche de connexion DCL (3), et une deuxième face (12.2) opposée à la première face (12.1), et
- un capot de diffusion de lumière (13) fixé sur l'embase (12) et recouvrant la deuxième face (12.2) de l'embase (12).

4. Luminaire (2) selon la revendication 3, dans lequel la carte électronique (21) est située en regard de la deuxième face (12.2) de l'embase (12).

5. Luminaire (2) selon l'une quelconque des revendications 1 à 4, dans lequel la fiche de connexion DCL (3) comprend un organe de fixation (10) qui est élastiquement déformable entre une position de fixation dans laquelle l'organe de fixation (10) est apte à coopérer avec un élément de fixation prévu sur le socle de connexion DCL (4) de manière à connecter mécaniquement la fiche de connexion DCL (3) au socle de connexion DCL (4), et une position de libération dans laquelle la fiche de connexion DCL (3) est apte à être déconnectée mécaniquement du socle de connexion DCL (4).

6. Luminaire (2) selon la revendication 5, lequel comprend en outre un organe de déverrouillage (25) qui est accessible lorsque la fiche de connexion DCL (3) est connectée mécaniquement et électriquement au socle de connexion DCL (4), l'organe de déverrouillage (25) étant déplaçable entre une position de repos et une position de déverrouillage dans laquelle l'organe de déverrouillage (25) sollicite l'organe de fixation (10) dans la position de libération.

7. Luminaire (2) selon la revendication 6, lequel comprend au moins un élément de sollicitation (27) configuré pour solliciter élastiquement l'organe de déverrouillage (25) vers la position de repos.

8. Luminaire (2) selon la revendication 6 ou 7, dans lequel l'organe de déverrouillage (25) comporte une partie de manipulation située au niveau d'une surface périphérique externe du boîtier de luminaire (11).

9. Luminaire (2) selon l'une quelconque des revendications 1 à 8, lequel comporte au moins une diode électroluminescente disposée dans le boîtier de luminaire et configurée pour émettre un faisceau lumineux.

## Patentansprüche

1. Leuchte (2), umfassend:
- einen DCL Anschlussstecker (3), der vorgesehen ist, mechanisch und elektrisch mit einem DCL Anschlusssockel (4) verbunden zu werden, der in einen mit einer Tragfläche (14) versehenen Träger (S), wie eine Wand oder eine Decke, integriert ist;
- ein Leuchtengehäuse (11), von dem sich der DCL Anschlussstecker (3) erstreckt, wobei das Leuchtengehäuse (11) ein Schutzelement (16) umfasst, das eine Kontaktfläche (17) aufweist, die ausgebildet ist, gegen die oder in die Nähe der Tragfläche (14) angeordnet zu werden, wenn der DCL Anschlussstecker (3) mechanisch und elektrisch mit dem DCL Anschlusssockel (4) verbunden ist; und
- eine elektronische Leiterplatte (21), die in dem Leuchtengehäuse (11) angeordnet ist,
**dadurch gekennzeichnet, dass** das Leuchtengehäuse (11) einen Aufnahmeraum (18) aufweist, der ausgebildet ist, einen zu dem DCL Anschlusssockel (4) gehörenden Befestigungshaken (6) aufzunehmen, wenn der DCL Anschlussstecker (3) mechanisch und elektrisch mit dem DCL Anschlusssockel (4) verbunden ist, und die elektronische Leiterplatte (21 mit einer Durchgangsöffnung (22) versehen ist, wobei das Leuchtengehäuse (11) ein Aufnahmeteil (19) aufweist, das den Aufnahmeraum (18) begrenzt und sich durch die Durchgangsöffnung (22) hindurch erstreckt.

2. Leuchte (2) nach Anspruch 1, bei der das Schutzelement (16) sich um den DCL Anschlussstecker (3) derart erstreckt, dass der DCL Anschlussstecker (3) nicht zugänglich ist, wenn der DCL Anschlussstecker (3) mechanisch und elektrisch mit dem DCL Anschlusssockel (4) verbunden ist.

3. Leuchte (2) nach einem beliebigen der Ansprüche 1 bis 2, bei der das Leuchtengehäuse (11) aufweist:
- eine Grundplatte (12), die eine erste Seite (12.1), die vorgesehen ist, zu der Tragfläche (14) gerichtet zu sein und von der der DCL Anschlussstecker (3) herausragt, und eine zweite Seite (12.2), entgegengesetzt zur ersten Seite (12.1), umfasst und
- eine Lichtverteilungsabdeckung (13), die an der Grundplatte (12) befestigt ist und die zweite Seite (12.2) der Grundplatte (12) überdeckt.

4. Leuchte (2) nach Anspruch 3, bei der die elektronische Leiterplatte (21) gegenüber der zweiten Seite (12.2) der Grundplatte (12) liegt.

5. Leuchte (2) nach einem beliebigen der Ansprüche 1 bis 4, bei der der DCL Anschlussstecker (3) ein Befestigungselemente (10) umfasst, das elastisch zwischen einer Befestigungsposition, in der das Befestigungselemente (10) in der Lage ist, mit einem auf dem DCL Anschlusssockel (4) vorgesehenen Befestigungselement derart zusammenzuarbeiten, das der DCL Anschlussstecker (3) mechanisch mit dem DCL Anschlusssockel (4) verbunden ist, und einer Freigabeposition, in der der DCL Anschlussstecker (3) in der Lage ist, mechanisch vom DCL Anschlusssockel (4) gelöst zu werden, verformbar ist.

6. Leuchte (2) nach Anspruch 5, die außerdem ein Entriegelungselement (25) umfasst, das zugänglich ist, wenn der DCL Anschlussstecker (3) mechanisch und elektrisch mit dem DCL Anschlusssockel (4) verbunden ist, wobei das Entriegelungselement (25) zwischen einer Ruhestellung und einer Entriegelungsstellung bewegbar ist, in der das Entriegelungselement (25) das Befestigungselemente (10) in die Freigabeposition vorgespannt.

7. Leuchte (2) nach Anspruch 6, die mindestens ein Vorspannelement (27) umfasst, das ausgebildet ist, das Entriegelungselement (25) in seine Ruhestellung elastisch vorzuspannen.

8. Leuchte (2) nach Anspruch 6 oder 7, bei der das Entriegelungselement (25) ein Handhabungsteil aufweist, das an einer äußeren Umfangsfläche des Leuchtengehäuses (11) liegt.

9. Leuchte (2) nach einem beliebigen der Ansprüche 1 bis 8, die mindestens eine Elektrolumineszenzdiode aufweist, die in dem Leuchtengehäuse angeordnet ist und ausgebildet ist, ein Lichtbündel abzustrahlen.

## Claims

1. Luminaire (2) comprising:
- a DCL connector plug (3) which is to be mechanically and electrically connected to a DCL connector socket (4) integrated in a support (S), such as a wall or a ceiling, provided with a support surface (14);
- a luminaire casing (11) from which the DCL connector plug (3) extends, the luminaire casing (11) comprising a protecting part (16) having a contact surface (17) which is configured to be positioned against or close to the support surface (14) when the DCL connector plug (3) is mechanically and electrically connected to the DCL connector socket (4); and
- an electronic board (21) arranged in the luminaire casing (11),
**characterised in that** the luminaire casing (11) comprises a receiving housing (18) which is configured to receive a fixing hook (6) belonging to the DCL connector socket (4) when the DCL connector plug (3) is mechanically and electrically connected to the DCL connector socket (4), and the electronic board (21) is provided with a through-opening (22), the luminaire casing (11) comprising a receiving part (19) which delimits the receiving housing (18) and extends through the through-opening (22).

2. Luminaire (2) according to claim 1, wherein the protecting part (16) extends around the DCL connector plug (3) in such a manner that the DCL connector plug (3) is inaccessible when the DCL connector plug (3) is mechanically and electrically connected to the DCL connector socket (4).

3. Luminaire (2) according to either claim 1 or claim 2, wherein the luminaire casing (11) comprises:
- a base (12) having a first face (12.1) which is to face the support surface (14) and from which the DCL connector plug (3) projects, and a second face (12.2) opposite the first face (12.1), and
- a light diffusing cover (13) which is fixed to the base (12) and covers the second face (12.2) of the base (12).

4. Luminaire (2) according to claim 3, wherein the electronic board (21) is situated opposite the second face (12.2) of the base (12).

5. Luminaire (2) according to any one of claims 1 to 4, wherein the DCL connector plug (3) comprises a fixing member (10) which is resiliently deformable between a fixing position in which the fixing member (10) is capable of cooperating with a fixing element provided on the DCL connector socket (4) so as to mechanically connect the DCL connector plug (3) to the DCL connector socket (4), and a release position in which the DCL connector plug (3) is capable of being mechanically disconnected from the DCL connector socket (4).

6. Luminaire (2) according to claim 5, which further comprises an unlocking member (25) which is accessible when the DCL connector plug (3) is mechanically and electrically connected to the DCL connector socket (4), the unlocking member (25) being displaceable between a rest position and an unlocking position in which the unlocking member (25) urges the fixing member (10) into the release position.

7. Luminaire (2) according to claim 6, which comprises at least one urging element (27) which is configured to resiliently urge the unlocking member (25) towards the rest position.

8. Luminaire (2) according to claim 6 or 7, wherein the unlocking member (25) comprises a handling part situated in the region of an outer peripheral surface of the luminaire casing (11).

9. Luminaire (2) according to any one of claims 1 to 8, which comprises at least one light-emitting diode which is arranged in the luminaire casing and is configured to emit a light beam.
